# EUROPÄISCHE PATENTSCHRIFT

(11) **EP 0 720 927 B1**
(45) Veröffentlichungstag und Bekanntmachung des Hinweises auf die Patenterteilung: **11.03.1998**
(21) Anmeldenummer: 95120748.9
(22) Anmeldetag: 30.12.1995
(51) Int. Cl.: B60J 7/00

(54) **Fahrzeugdach mit einer zum Öffnen schwenkbaren Dachscheibe**
Vehicle roof provided with a roof panel opened by tilting
Toit de véhicule pourvu d'une ouverture pivotante du panneau de toit

(30) Priorität: 09.01.1995 DE 19500367
(43) Veröffentlichungstag der Anmeldung: 10.07.1996
(73) Patentinhaber: WEBASTO KAROSSERIESYSTEME GmbH, D-82131 Stockdorf (DE)
(72) Erfinder: Färber, Manfred, D-82407 Wielenbach (DE); Wikelski, Thomas, D-82266 Schlagenhofen (DE); Mayer, Johann, D-85238 Petershausen (DE)
(74) Vertreter: Wiese, Gerhard

(56) Entgegenhaltungen:
- EP-A- 0 531 074
- DE-A- 3 413 966
- DE-A- 3 607 944
- DE-A- 4 105 865

## Beschreibung

Die Erfindung betrifft ein Fahrzeugdach mit einer zum Öffnen schwenkbaren Dachscheibe, mit einem unterhalb der Dachscheibe angeordneten, die Dachscheibe wahlweise verschließenden oder wenigstens teilweise freigebenden Rollo, das auf eine Welle aufwickelbar und mit wenigstens einem, quer zur Bewegungsrichtung verlaufenden Festelement verbunden ist, welches in seitlichen, längs verlaufenden Führungen geführt ist.

Aus der DE-A-34 27 772 ist ein Fahrzeugdach bekannt, bei dem Führungsschienen fuhr ein Rollo eine gekrümmte Führungsbahn bilden, längs der das Rollo zur Vergrößerung der Kopffreiheit in eine angehobene Position verfahrbar ist. Das Verfahren des Rollos längs einer gekrümmten Führungsbahn erfordert einen erhöhten Kraftaufwand. Die mit den Führungen zusammenarbeitenden Teile des Rollos bzw. der Festelemente sind ferner einem erhöhten Verschleiß ausgesetzt.

Der Erfindung liegt die Aufgabe zugrunde, ein Fahrzeugdach bereitzustellen, bei dem eine große Kopffreiheit trotz minimaler Betätigungskräfte erreichbar ist.

Diese Aufgabe wird gemäß der vorliegenden Erfindung dadurch gelöst, daß die Führungen mittels einer Anhebemechanik beim Betätigen des Rollos in Schließrichtung angehoben und beim Betätigen in Öffnungsrichtung abgesenkt werden. Vorteilhafte Ausgestaltungen der Erfindung sind den Unteransprüchen zu entnehmen. Dadurch, daß die Führungen für das Rollo anhebbar und absenkbar ausgelegt sind, können sie selbst einen geraden oder nur schwach gekrümmten Verlauf haben, der eine Betätigung mit geringem Kraftaufwand ermöglicht.

Gemäß einer vorteilhaften Weiterbildung ist vorgesehen, daß die Führungen um eine Schwenkachse schwenkbar gelagert sind, die im Bereich der für das Auf- und Abwickeln des Rollos zuständigen Welle angeordnet ist. Durch die schwenkbare Anordnung der Führungen und die gewählte Lage der Schwenkachse wird ein besonders einfaches Anheben und Absenken der Führungen ermöglicht.

Eine weitere vorteilhafte Ausgestaltung sieht vor, daß das Rollo und die Anhebemechanik für die Führungen mittels desselben Antriebes betätigbar sind. Dieser Antrieb ist vorzugsweise als Elektromotor ausgebildet.

Es ist ferner vorteilhaft, wenn die Anhebemechanik an einem in Schließrichtung vorauslaufenden vorderen Festelement des Rollos angelenkt ist.

In einer besonders vorteilhaften Ausführungsform umfaßt die Anhebemechanik einen Schlepphebel, dessen eines Ende mit dem Antrieb verbunden und in einer ortsfesten Führungsschiene verschiebbar geführt ist, dessen anderes Ende am vorderen Festelement angelenkt ist und der ferner einen Steuerstift aufweist, der in einer zur ortsfesten Führungsschiene abschnittsweise nicht parallelen Kulissenbahn geführt ist.

Eine diese Kulissenbahn aufweisende Kulisse ist vorzugsweise als separates Formteil ausgeführt und an der ortsfesten Führungsschiene befestigt. In einer alternativen Ausführungsform ist auch eine einstückige Ausbildung der Kulisse und der ortsfesten Führungsschienen möglich.

Die vorliegende Erfindung ist besonders vorteilhaft in Verbindung mit einem Fahrzeugdach einsetzbar, bei dem die Dachscheibe zum Öffnen mittels eines elektrischen Antriebes absenkbar ist. Hierbei sind der Antrieb der Dachscheibe und der Antrieb des Rollos vorteilhaft derart gekoppelt, daß die Dachscheibe erst bei geöffnetem Rollo absenkbar ist. Durch diese Koppelung wird erreicht, daß der Raum, der für das Anheben des Rollos bei geschlossenem Zustand desselben erforderlich ist, nach dem Öffnen desselben für das Absenken der Dachscheibe freigegeben wird.

Die Koppelung der beiden Antriebe ist vorzugsweise so gestaltet, daß auch bei einem Betätigen des Antriebes der Dachscheibe bei geschlossenem Rollo zunächst der Antrieb des Rollos in Öffnungsrichtung beaufschlagt wird und erst nach dem Öffnen des Rollos der Antrieb der Dachscheibe für deren Absenkung aktiviert wird. Dem Bediener wird durch eine derartige Koppelung ermöglicht, mit einer einzigen Bedienungshandlung, nämlich dem Betätigen eines Bedienelementes zum Absenken der Dachscheibe auch gleichzeitig das vorab erforderliche Öffnen des Rollos zu bewirken.

Zur Erhöhung der Stabilität eines Stoffrollos ist es vorteilhaft, wenn dieses quer zur Bewegungsrichtung mehrere voneinander beabstandete Festelemente aufweist. Zur aufgabengemäßen Minimierung der Bauhöhe des Fahrzeugdaches ist es dabei vorteilhaft, wenn der Abstand der Festelemente so gewählt ist, daß diese beim Aufwickeln auf der Welle in verschiedenen Umfangspositionen liegen. Hierdurch läßt sich die Bauhöhe im Bereich der zum Aufwickeln vorgesehenen Welle durch das Vermeiden eines Übereinanderliegen der Festelemente zusätzlich reduzieren. Zu demselben Zweck ist es vorteilhaft, wenn die Festelemente eine an die Krümmung der Welle angepaßte Form aufweisen.

Nachfolgend wird ein Ausführungsbeispiel der Erfindung anhand der Zeichnungen beschrieben. Es zeigt:
- Fig. 1: eine schematische Draufsicht auf ein Fahrzeugdach,
- Fig. 2: einen Längsschnitt durch Führungen und Anhebemechanik des Rollos in dessen vollständig geöffneter Position,
- Fig. 3: eine der Fig. 2 entsprechende Darstellung bei teilweise geschlossenem Rollo,
- Fig. 4: eine der Fig. 2 entsprechende Darstellung bei teilweise geschlossenem und angehobenem Rollo und
- Fig. 5: eine Darstellung gemäß Fig. 2 bei vollständig geschlossenem und angehobenem Rollo.

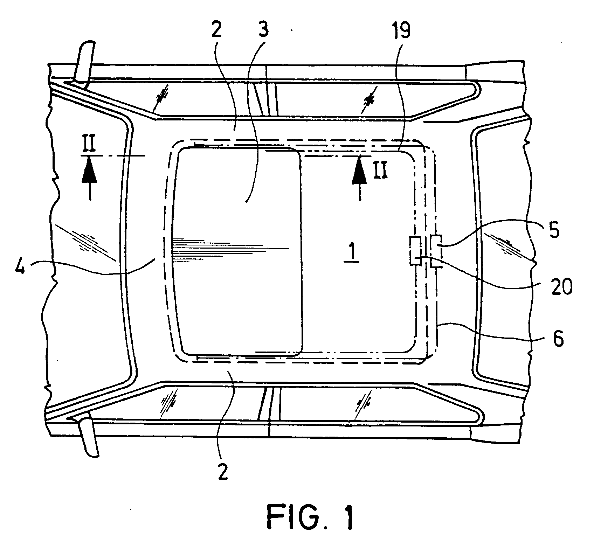

In Fig. 1 ist in einem festen Fahrzeugdach 1, das von seitlichen Dachholmen 2 und einem vorderen Querholm 4 begrenzt wird, eine Dachscheibe 3 angeordnet, die in bekannter Weise um eine nahe ihrer Vorderkante gelegene, nicht näher bezeichnete Schwenkachse schwenkbar und bei abgesenkter Hinterkante unter das feste Fahrzeugdach 1 verschiebbar ist. Hierfür ist die Dachscheibe 3 in bekannter Weise nach Art eines Schiebehebedaches mit einer entsprechenden Mechanik an seitlichen Führungsschienen im Bereich der Seitenholme 2 gelagert und mittels Antriebskabeln 6 über einen vorzugsweise elektrischen Antrieb 5 für ein Öffnen oder Schließen betätigbar. Unterhalb des vorderen Querholmes 4 ist in einem Aufnahmeraum 9 ein insgesamt mit 7 bezeichnetes Rollo angeordnet, welches auf einer dort gelagerten Welle 8 auf- und abrollbar installiert ist. Das Rollo 7 besteht aus einer Stoffbahn, an deren vorderem Ende ein vorderes Festelement 10 befestigt ist, welches in aufgewickeltem Zustand des Rollos 7 vor der Welle 8, jedoch außerhalb des Aufnahmeraumes 9, liegt. Die nicht näher bezeichnete Stoffbahn des Rollos 7 ist mit ihrem anderen Ende mit der Welle 8 fest verbunden, wobei letztere in Aufwickelrichtung des Rollos 7 federnd vorgespannt ist.

Das vordere Festelement 10 ist mit seitlichen Gleitelementen in einer Führung 11 gelagert, die sich unterhalb der Dachscheibe 3 über deren Länge hinweg nach hinten erstreckt und die mittels einer in unmittelbarer Nähe der Achse der Welle 8 angeordneten Schwenkachse 12 schwenkbar gelagert ist. An ihrem hinteren Ende ist die Führung 11 mittels einer Feder 13 in eine nach unten gedrückte Stellung federnd vorbelastet.

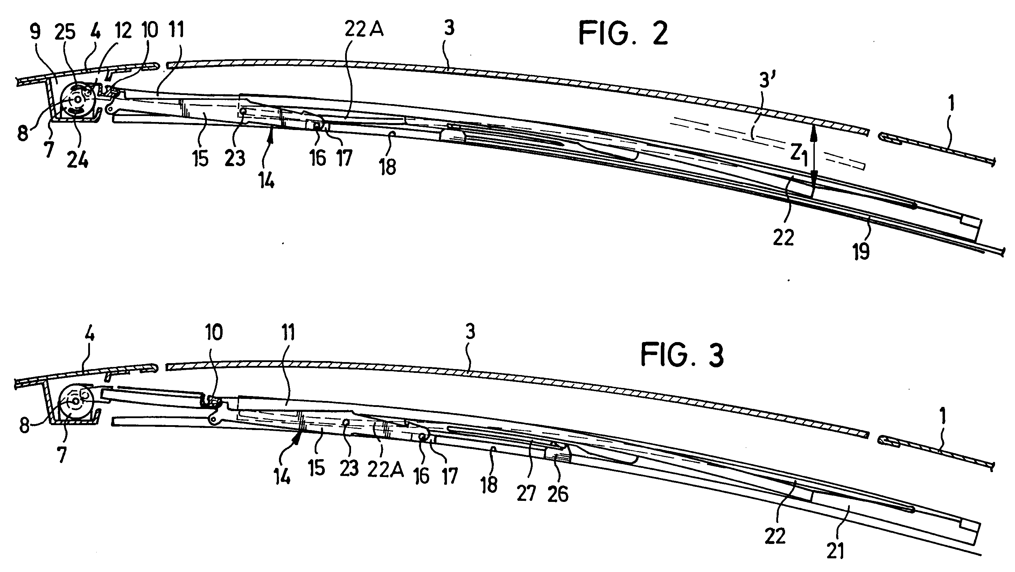

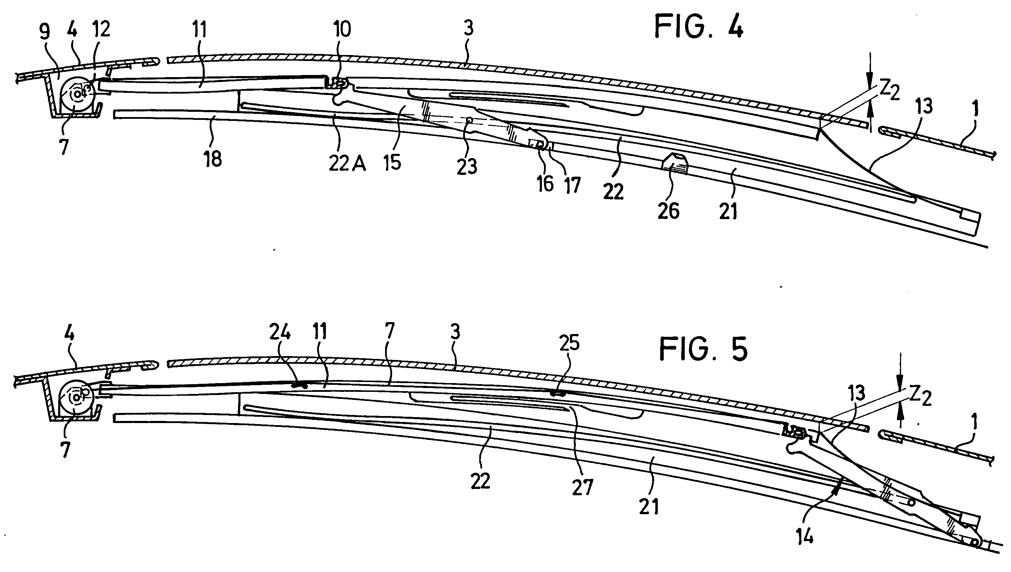

Bei vollständig geöffnetem Rollo 7 gemäß Fig. 2 weist das hintere Ende der Führung 11 zur Unterseite der Dachscheibe 3 einen relativ großen Abstand Z₁ auf. Durch die schwenkbare Lagerung der Führung 11 wird dieser Abstand beim Schließen des Rollos 7 zu einem äußerst geringen Abstand Z₂ verkleinert, welcher in den Fign. 4 und 5 angedeutet ist. Dadurch wird der etwa ab der Mitte der Dachscheibe 3 nach hinten zur Verfügung stehende Kopfraum deutlich vergrößert, sodaß auch großgewachsene Fahrer bei geschlossenem Rolle keine Berührung zu diesem haben.

Die insgesamt mit 14 bezeichnete Anhebemechanik weist zum Anheben der beidseits längs der Seitenholme 2 vorgesehenen Führungen 11 einen Schlepphebel 15 auf. Dieser ist mit seinem in Fig. 2 vorne liegenden Ende schwenkbar mit dem vorderen Festelement 10 verbunden. Das andere Ende des Schlepphebels 15 ist mit einer Drehachse 16 an einem Gleitelement 17 schwenkbar gelagert, welches in einer ortsfesten Führungsschiene 18 verschiebbar geführt ist. Am Gleitelement 17 greifen ferner Antriebskabel 19 für den Antrieb des Rollos 7 an, welche mit einem in Fig. 1 schematisch angedeuteten, vorzugsweise elektrischen Antrieb 20, verbunden sind. Mit den ortsfesten Führungsschienen 18 verbunden sind Kulissen 21, in denen Kulissenbahnen 22 vorgesehen sind, in welche ein etwa in der Mitte des Schlepphebels 15 angeordneter Steuerstift 23 eingreift. Die Kulissenbahn 22 weist in ihrem vorderen Bereich einen Abschnitt 22A auf, welcher annähernd parallel zur ortsfesten Führungsschiene 18 verläuft. Anschließend geht die Kulissenbahn nach hinten in eine ansteigende Rampe über und entfernt sich in einer sanft gekrümmten Bahn stetig von der Führungsschiene 18. Bei einer Schließbewegung des Rollos 7 ausgehend von einer in der Fig. 2 gezeigten vollständig geöffneten Position gleitet der Steuerstift 23 zunächst in dem Kulissenbahnabschnitt 22A annähernd parallel zur Führungsschiene 18. Dabei bewegt sich das vordere Festelement 10 ebenfalls parallel zur Führungsschiene 18, wobei das Rollo 7 in einen teilweise geschlossenen Zustand versetzt wird. Sobald der Steuerstift 23 in den Bereich der ansteigenden Rampe der Kulissenbahn 22 gerät, stellt er den Schlepphebel 15 stetig steigend nach oben aus, wobei dieser gleichzeitig das vordere Festelement 10 langsam weiter mit dem Rollo 7 nach hinten schleppt und gleichzeitig den Abstand Z von dem Betrag Z₁ (Fig. 2) zu dem in der Endlage nach vorhandenen Abstand Z₂ (Fig. 5) verkleinert.

Mit dem Antriebskabel 19 für das Rollo 7 ist ein hinter dem Gleitelement 17 in einem Abstand zu diesem vorgesehenes Riegelelement 26 ebenfalls verschiebbar in der Führungsschiene 18 vorgesehen, welches bei vollständig geöffnetem Rollo 7 (Fig. 2) in eine an der Führung 11 vorgesehene, nach hinten und unten geöffnete Riegelkulisse 27 eingreift. Dadurch wird der Schlepphebel 15 bei geöffnetem Rollo 7 in einer stabilen Lage nach unten gehalten. Riegelelement 26 und Gleitelement 17 sind beide über das Antriebskabel 19 gekoppelt.

Zur Erhöhung der Stabilität des Rollos 7 sind weitere Festelemente 24 bzw. 25 in Abständen voneinander vorgesehen, welche in quer zur Stoffbahn verlaufende Taschen eingenäht oder eingeschweißt sind und seitlich ebenfalls in die Führungen 11 eingreifen. Diese Festelemente 24, 25 sind so voneinander beabstandet, daß sie, wie aus Fig. 2 ersichtlich, im aufgewickelten Zustand des Rollos 7 in Umfangsbereichen liegen, die nebeneinander, hier gegenüber, angeordnet sind. Außerdem weisen diese Festelemente 24 bzw. 25 eine an die Krümmung der Welle 8 angepaßte gekrümmte Form auf, wodurch sich zusätzlich eine Reduzierung der Dicke des auf die Welle 8 aufgewickelten Rollos 7 ergibt.

Der Antrieb 5 für die Dachscheibe ist mit dem Antrieb 20 für das Rollo 7 derart gekoppelt, daß sich die Dachscheibe 3 erst dann in eine abgesenkte Stellung bewegen läßt, wenn das Rollo 7 in seine vollständig geöffnete Position (Fig. 2) verfahren würde. Zur Erleichterung der Bedienung ist dabei vorgesehen, daß ein Betätigen eines Schaltelementes für den Antrieb 5 zum Absenken der Dachscheibe 3 bei einem geschlossenen Rollo 7 zunächst den Antrieb 20 des Rollos in Öffnungsrichtung ansteuert und erst nach vollständigem Öffnen desselben ein Absenken der Dachscheibe 3 bewirkt. Solange die Dachscheibe 3 sich im abgesenkten Zustand befindet, ist kein Schließen des Rollos 7 möglich. Der für das Schließen des Rollos benötigte Raum wird nämlich gemäß der Erfindung gleichzeitig für das Absenken der Dachscheibe 3 verwendet.

Bei einem aus mehreren Glasscheiben zusammengesetzten Dach muß das Rollo 7 nicht, wie gezeigt, in einem Aufnahmeraum 9 angeordnet sein, der unter einem vorderen Querholm 4 liegt, sondern kann auch unter einem Glaselement des Daches angeordnet sein, welches beispielsweise als Windabweislamelle ausgebildet ist.

## Patentansprüche

1. Fahrzeugdach mit einer zum Öffnen schwenkbaren Dachscheibe (3), mit einem unterhalb der Dachscheibe (3) angeordneten, die Dachscheibe (3) wahlweise verschließenden oder wenigstens teilweise freigebenden Rollo (7), das auf eine Welle (8) aufwickelbar ist und mit wenigstens einem quer zur Bewegungsrichtung verlaufenden Festelement (10, 24, 25) verbunden ist, welches in seitlichen, längsverlaufenden Führungen (11) geführt ist**, dadurch gekennzeichnet**, daß die Führungen (11) mittels einer Anhebemechanik (14) beim Betätigen des Rollos (7) in Schließrichtung angehoben und beim Betätigen in Öffnungsrichtung abgesenkt werden.

2. Fahrzeugdach nach Anspruch 1, **dadurch gekennzeichnet,** daß die Führungen (11) um eine Schwenkachse (12) schwenkbar gelagert sind, die im Bereich der Welle (8) angeordnet ist.

3. Fahrzeugdach nach Anspruch 1 oder 2, **dadurch gekennzeichnet,** daß das Rollo (7) und die Anhebemechanik (14) mittels desselben Antriebes (20) betätigbar sind.

4. Fahrzeugdach nach Anspruch 3, **dadurch gekennzeichnet,** daß der Antrieb (20) ein Elektromotor ist.

5. Fahrzeugdach nach einem der Ansprüche 1 bis 4, **dadurch gekennzeichnet,** daß die Anhebemechanik (14) an einem in Öffnungsrichtung vorauslaufenden vorderen Festelement (10) des Rollos (7) angelenkt ist.

6. Fahrzeugdach nach Anspruch 5, **dadurch gekennzeichnet,** daß die Anhebemechanik (14) einen Schlepphebel (15) umfaßt, dessen eines Ende mit dem Antrieb (20) verbunden und in einer ortsfesten Führungsschiene (18) verschiebbar geführt ist, dessen anderes Ende am vorderen Festelement (10) angelenkt ist und der ferner einen Steuerstift (23) aufweist, der in einer zur ortsfesten Führungsschiene (18) abschnittsweise nicht parallelen Kulissenbahn (22) geführt ist.

7. Fahrzeugdach nach Anspruch 6, dadurch gekennzeichnet, daß eine die Kulissenbahn (22) aufweisende Kulisse (23) als separates Formteil ausgeführt und an der ortsfesten Führungsschiene (18) befestigt ist.

8. Fahrzeugdach nach einem der vorhergehenden Ansprüche, bei dem die Dachscheibe (3) zum Öffnen mittels eines elektrischen Antriebes (5) absenkbar ist, **dadurch gekennzeichnet,** daß der Antrieb (5) der Dachscheibe (3) mit dem Antrieb (20) des Rollos (7) derart gekoppelt ist, daß die Dachscheibe (3) erst bei geöffnetem Rollo (7) absenkbar ist.

9. Fahrzeugdach nach Anspruch 8, **dadurch gekennzeichnet,** daß bei geschlossenem Rollo (7) und bei einer Betätigung des Antriebes (5) der Dachscheibe der Antrieb (20) des Rollos (7) zunächst in Öffnungsrichtung beaufschlagt wird und erst nach Öffnen des Rollos (7) der Antrieb (5) der Dachscheibe (3) aktiviert wird.

10. Fahrzeugdach nach einem der vorhergehenden Ansprüche, **dadurch gekennzeichnet,** daß das Rollo (7) quer zur Bewegungsrichtung mehrere voneinander beabstandete Festelemente (24, 25) aufweist.

11. Fahrzeugdach nach Anspruch 10, **dadurch gekennzeichnet,** daß der Abstand der Festelemente (24, 25) so gewählt ist, daß diese beim Aufwickeln auf der Welle (8) in verschiedenen Umfangspositionen liegen.

12. Fahrzeugdach nach Anspruch 10 oder 11, **dadurch gekennzeichnet,** daß die Festelemente (24, 25) eine an die Krümmung der Welle (8) angepaßte Form aufweisen.

## Claims

1. A vehicle roof with a roof panel (3) adapted to be pivoted for opening, with a window shade (7) disposed under the roof panel (3) and optionally closing or at least partially exposing the roof panel (3), and being adapted to be wound onto a shaft (8) and it being connected to at least one rigid element (10, 24, 25) extending crosswise to the direction of movement and which is guided in lateral longitudinally extending guides (11), characterised in that the guides (11) are raised by means of a lifting mechanism (14) when the window shade (7) is moved in the closing direction and are lowered when it is actuated in the opening direction.

2. A vehicle roof according to Claim 1, characterised in that the guides (11) are mounted to pivot about a pivot pin (12) disposed in the region of the shaft (8).

3. A vehicle roof according to Claim 1 or 2, characterised in that the window shade (7) and the lifting mechanism (14) can be actuated by the same drive (20).

4. A vehicle roof according to Claim 3, characterised in that the drive (20) is an electric motor.

5. A vehicle roof according to one of Claims 1 to 4, characterised in that the lifting mechanism (14) is articulated on a front rigid element (10) of the window shade (7) which is foremost in the opening direction.

6. A vehicle roof according to Claim 5, characterised in that the lifting mechanism (14) comprises a drag lever (15) one end of which is connected to the drive (20) and guided for displacement in a fixed guide rail (18) while its other end is articulated on the front rigid element (10) and which furthermore comprises a control pin (23) guided in a slide track (22) sections of which are not parallel with the said rigid guide rail (18).

7. A vehicle roof according to Claim 6, characterised in that a guide element (23) comprising the slide track (22) is constructed as a separate moulded part and is fixed on the stationary guide rail (18).

8. A vehicle roof according to one of the preceding claims in which the roof panel (3) can be lowered by means of an electric drive (5) in order to be opened, characterised in that the drive (5) of the roof panel (3) is so coupled to the drive (20) of the window shade (7) that the roof panel (3) can only be lowered when the window shade (7) is open.

9. A vehicle roof according to Claim 8, characterised in that when the window shade (7) is closed and upon an actuation of the drive (5) of the roof panel the drive (20) of the window shade (7) is initially acted upon in the opening direction and the drive (5) of the roof panel (3) is activated only after the window shade (7) has been opened.

10. A vehicle roof according to one of the preceding Claims, characterised in that the window shade (7) comprises a plurality of spaced apart rigid elements (24, 25) which extend crosswise to the direction of movement.

11. A vehicle roof according to Claim 10, characterised in that the distance between the rigid elements (24, 25) is so chosen that they lie in different peripheral positions when the window shade is wound onto the shaft (8).

12. A vehicle roof according to Claim 10 or 11, characterised in that the rigid elements (24, 25) are of a form which is adapted to the curvature of the shaft (8).

## Revendications

1. Toit de véhicule pourvu d'une vitre de toit (3) s'ouvrant en pivotant, avec un store (7) disposé en dessous de la vitre de toit (3) qui ferme à volonté la vitre de toit (3) ou la libère au moins en partie, store que l'on peut enrouler sur un arbre (8) et qui est relié avec au moins un élément fixe (10, 24, 25) qui s'étend en travers par rapport au sens du déplacement, élément fixe (10, 24, 25) que l'on fait passer dans des guides latéraux (11) s'étendant dans le sens de la longueur,
caractérisé en ce que
les guides (11) sont soulevés au moyen d'un mécanisme de levage (14) lors de l'actionnement du store (7) dans le sens de la fermeture et sont abaissés lors de l'actionnement du store (7) dans le sens de l'ouverture.

2. Toit de véhicule selon la revendication 1,
caractérisé en ce que
les guides (11) sont montés de façon à pouvoir pivoter autour d'un axe de pivotement (12) qui est disposé dans la zone de l'arbre (8).

3. Toit de véhicule selon la revendication 1 ou 2 ,
caractérisé en ce que
le store (7) et le mécanisme de levage (14) peuvent être actionnés au moyen du même mécanisme d'entraînement (20).

4. Toit de véhicule selon la revendication 3,
caractérisé en ce que
le mécanisme d'entraînement (20) est un moteur électrique.

5. Toit de véhicule selon l'une des revendications 1 à 4,
caractérisé en ce que
le mécanisme de levage (14) est articulé sur un élément fixe antérieur qui précède, (10) du store (7).

6. Toit de véhicule selon la revendication 5,
caractérisé en ce que
le mécanisme de levage (14) comprend un levier de traction (15), dont l'une des extrémités est reliée au mécanisme d'entraînement (20) et passe de façon à pouvoir coulisser dans un rail de guidage à poste fixe (18), dont l'autre extrémité est articulée sur l'élément fixe antérieur (10) et qui présente en outre un axe de commande (23) qui passe dans une piste de coulisse qui n'est pas parallèle de façon fragmentaire au rail de guidage à poste fixe (18).

7. Toit de véhicule selon la revendication 6,
caractérisé en ce qu'
une coulisse présentant la piste de coulisse (22) est réalisée sous la forme d'une pièce moulée séparée et est fixée sur le rail de guidage à poste fixe (18).

8. Toit de véhicule selon l'une des revendications précédentes, dans laquelle la vitre de toit (3) peut, pour s'ouvrir, être abaissée au moyen d'un mécanisme d'entraînement électrique (5),
caractérisé en ce que
le mécanisme d'entraînement (5) de la vitre du toit (3) est accouplée au mécanisme d'entraînement (20) du store (7) d'une manière telle que la vitre de toit (3) ne peut s'abaisser que quand le store (7) est ouvert.

9. Toit de véhicule selon la revendication 8,
caractérisé en ce que
lors de la fermeture du store (7) et lors d'un actionnement du mécanisme d'entraînement (5) de la vitre de toit, le mécanisme d'entraînement (20) du store (7) est d'abord sollicité dans le sens de l'ouverture et le mécanisme d'entraînement (5) de la vitre de toit (3) n'est actionné qu'après l'ouverture du store (7).

10. Toit de véhicule selon l'une des revendications précédentes,
caractérisé en ce que
le store (7) présente perpendiculairement au sens du mouvement plusieurs éléments fixes (24, 25) situés à une certaine distance les uns des autres.

11. Toit de véhicule selon la revendication 10,
caractérisé en ce que
la distance entre les éléments fixes (24, 25) est choisie de telle façon que ceux-ci se trouvent lors de l'enroulement sur l'arbre (8) dans des positions périphériques différentes.

12. Toit de véhicule selon la revendication 10 ou 11,
caractérisé en ce que
les éléments fixes (24, 25) présentent une forme adaptée à la courbure de l'arbre (8).
